# EUROPÄISCHE PATENTSCHRIFT

(11) **EP 2 904 430 B1**
(45) Veröffentlichungstag und Bekanntmachung des Hinweises auf die Patenterteilung: **02.04.2025**
(21) Anmeldenummer: 13745426.0
(22) Anmeldetag: 06.08.2013
(51) Int. Cl.: G01V 3/15

(54) **ORTUNGSVORRICHTUNG ZUR BESTIMMUNG EINER OBJEKTTIEFE**
POSITIONING DEVICE FOR DETERMINING OBJECT DEPTH
DISPOSITIF DE LOCALISATION PERMETTANT DE DÉTERMINER LA PROFONDEUR D'UN OBJET

(30) Priorität: 05.10.2012 DE 102012218174
(43) Veröffentlichungstag der Anmeldung: 12.08.2015
(73) Patentinhaber: Robert Bosch GmbH, 70442 Stuttgart (DE)
(72) Erfinder: KRAPF, Reiner, 70794 Filderstadt (DE)
(86) Internationale Anmeldenummer: PCT/EP2013/066496
(87) Internationale Veröffentlichungsnummer: WO 2014/053265

(56) Entgegenhaltungen:
- EP-A1- 1 298 457
- EP-A1- 2 189 819
- EP-A2- 0 551 606
- WO-A1-2005/078480
- WO-A1-2005/109040
- WO-A1-2007/147199

## Beschreibung

### Stand der Technik

Es ist bereits eine Ortungsvorrichtung zur Bestimmung einer Objekttiefe eines verdeckt angeordneten Ortungsobjekts, insbesondere eines Armierungseisens, mit einem ersten Ortungssensor, zumindest einem zweiten Ortungssensor und mit einer Recheneinheit, die dazu vorgesehen ist, zumindest aus einer Ortungskenngröße des ersten Ortungs-sensors eine Objekttiefe zu bestimmen, vorgeschlagen worden.

Ortungsvorrichtungen, die zur Bestimmung einer Objekttiefe eines georteten Objekts geeignet sind, sind beispielsweise aus WO 2007/147199 A1, EP 0 551 606 A2, EP 1 298 457 A1 und WO 2005/078480 A1 bekannt.

### Offenbarung der Erfindung

Die Erfindung betrifft eine Ortungsvorrichtung gemäß Anspruch 1 sowie ein Verfahren gemäß Anspruch 8 zur Bestimmung einer Objekttiefe eines verdeckt angeordneten Ortungsobjekts, insbesondere eines Armierungseisens, mit einem ersten Ortungssensor, zumindest einem zweiten Ortungssensor und mit einer Recheneinheit, die dazu vorgesehen ist, zumindest aus einer Ortungskenngröße des ersten Ortungssensors eine Objekttiefe zu bestimmen.

Die Recheneinheit ist dazu vorgesehen, die bestimmte Objekttiefe in zumindest einem Betriebszustand mittels einer Ortungskenngröße des zweiten Ortungssensors zu korrigieren. Unter einer "Objekttiefe" soll insbesondere eine Information verstanden werden, die zumindest von einem Abstand zwischen dem Ortungsobjekt und dem Ortungssensor abhängig ist. Insbesondere ist ein die Ortungsvorrichtung aufweisendes Ortungsgerät dazu vorgesehen, mit einer Seite an ein das Ortungsobjekt umschließendes Messobjekt, insbesondere eine Wand, angelegt zu werden. Vorzugsweise bestimmt die Recheneinheit eine Objekttiefe, die als ein Abstand des Ortungsobjekts von einer Ebene, die von an dem Messobjekt anliegenden Stellen des Ortungsgeräts aufgespannt wird, ausgebildet ist. Vorteilhaft umfasst die Objekttiefe zumindest einen Betrag und besonders vorteilhaft eine Toleranz, die eine Genauigkeit des Betrags der Objekttiefe beschreibt. Insbesondere soll unter einem "verdeckt angeordneten Ortungsobjekt" ein Objekt verstanden werden, das durch das Messobjekt verborgen, insbesondere innerhalb und/oder hinter dem Messobjekt, angeordnet ist. Unter einem "Armierungseisen" soll insbesondere ein metallisches Ortungsobjekt verstanden werden, das in einem ordnungsgemäß verbauten Zustand eine vorgegebene Überdeckung durch das Messobjekt, insbesondere durch Beton, benötigt. Insbesondere weist das Armierungseisen ein ferromagnetisches Material auf. Insbesondere soll unter einem "Ortungssensor" eine Einheit verstanden werden, die dazu vorgesehen ist, bei einer Ortung eine Energie auszusenden und eine von dem Ortungsobjekt reflektierte Energie zu empfangen. Der erste Ortungssensor und der zweite Ortungssensor sind jeweils als ein, dem Fachmann als sinnvoll erscheinender Sensor ausgebildet, vorzugsweise jedoch als ein kapazitiver Sensor, als ein Schallsensor, als ein breitbandiger oder schmalbandiger Radarsensor, als ein induktiver Sensor, als ein Impact-Echo-Sensor, SAR-Sensor und/oder als ein Aufsatz-NMR-Sensor. Der erste Ortungssensor und der zweite Ortungssensor weisen unterschiedliche Funktionsprinzipien auf. Vorteilhaft weist die Ortungsvorrichtung neben dem ersten Ortungssensor und dem zweiten Ortungssensor einen dritten Ortungssensor und besonders vorteilhaft zumindest einen vierten Ortungssensor auf. Insbesondere ortet der dritte Ortungssensor und/oder der vierte Ortungssensor nach einem gleichen Ortungsprinzip wie der zweite Ortungssensor. Unter einer "Recheneinheit" soll insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Vorzugsweise sind die Bauteile der Recheneinheit auf einer gemeinsamen Platine angeordnet und/oder vorteilhaft in einem gemeinsamen Gehäuse angeordnet. Unter "vorgesehen" soll insbesondere speziell programmiert, ausgelegt und/oder ausgestattet verstanden werden. Insbesondere soll unter einer "Ortungskenngröße" eine Energie verstanden werden, die dazu vorgesehen ist, eine die Objekttiefe aufweisende Information von dem Ortungssensor zu der Recheneinheit zu transportieren. Vorzugsweise ist die Ortungskenngröße als ein elektrisches analoges und/oder digitales Signal ausgebildet. Unter dem Begriff "korrigieren" soll insbesondere verstanden werden, dass die Recheneinheit aus der Ortungskenngröße des ersten Ortungssensors die Objekttiefe bestimmt, die Objekttiefe mittels der Ortungskenngröße des zweiten Ortungssensors überprüft und, falls die Objekttiefe als falsch erkannt wird, eine Information ausgibt, die vorteilhaft von der zuvor ermittelten Objekttiefe und/oder einer geänderten Toleranz der bestimmten Objekttiefe abhängig ist. Durch die erfindungsgemäße Ausgestaltung der Ortungsvorrichtung ist konstruktiv einfach eine sehr genaue Tiefenortung möglich, bei der Ortungsungenauigkeiten zuverlässig erkannt werden können. Ortungsungenauigkeiten treten insbesondere auf, wenn Ortungsobjekte unerwartete Abmessungen und/oder Formen aufweisen oder wenn mehrere Ortungsobjekte auf kleinem Raum, insbesondere hintereinander, angeordnet sind. Dabei kann der zweite Ortungssensor besonders einfach aufgebaut sein. Insbesondere muss der zweite Ortungssensor nicht langzeitdriftstabil sein.

Der erste Ortungssensor ist dazu vorgesehen, das Ortungsobjekt induktiv zu orten, wodurch konstruktiv einfach eine besonders genaue Ortung, insbesondere von metallischen und insbesondere ferromagnetischen Ortungsobjekten, möglich ist. Insbesondere soll unter "induktiv orten" verstanden werden, dass der Ortungssensor ein magnetisches Feld aufbaut und eine Veränderung des magnetischen Felds und/oder eine Reflektion eines Teils des magnetischen Felds durch das Ortungsobjekt erfasst. Vorzugsweise weist der Ortungssensor eine Spule auf, die bei einem Ortungsvorgang das magnetische Feld aufbaut. Vorzugsweise sind der Ortungssensor und insbesondere die Recheneinheit dazu vorgesehen, die Objekttiefe über eine Bestimmung eines von der Spule in das Ortungsobjekt induzierten Felds mittels einer zweiten Spule zu ermitteln. Besonders bevorzugt sind der Ortungssensor und insbesondere die Recheneinheit dazu vorgesehen, die Objekttiefe über eine Erfassung von durch einen Impuls in das Ortungsobjekt induzierten Wirbelströmen zu ermitteln. Vorzugsweise ist die Recheneinheit dazu vorgesehen, durch die Bestimmung eines Verhaltens des Ortungssensors bei einer Ortung, bei der kein Ortungsobjekt erfasst wird, den Ortungssensor, insbesondere von Eigenschaften des Messobjekts abhängig, zu kalibrieren. Vorzugsweise ortet der erste Ortungssensor bei einer Verortung eines Messobjekts ständig, das heißt insbesondere mehr als zwei Mal pro Sekunde, vorteilhaft mehr als fünf Mal pro Sekunde.

Der zweite Ortungssensor ist dazu vorgesehen, das Ortungsobjekt zumindest im Wesentlichen von einer Ortungsmasse des Ortungsobjekts unabhängig zu orten, wodurch eine besonders zuverlässige Überprüfung einer mit einem insbesondere kapazitiven und/oder induktiven Ortungssensor bestimmten Objekttiefe möglich ist. Alternativ und nicht gemäß dieser Erfindung könnte der zweite Ortungssensor ebenfalls als ein induktiver Sensor ausgebildet sein, der mit einer von der Ortungsmethode des ersten Ortungssensors verschiedenen Ortungsmethode ortet. Unter einer "Ortungsmasse" soll insbesondere ein Teil einer Masse des Ortungsobjekts verstanden werden, die bei einer jeweiligen Ortung das Ortungssignal des ersten Ortungssensors im Wesentlichen beeinflusst. Insbesondere soll unter "zumindest im Wesentlichen unabhängig" verstanden werden, dass die mittels des zweiten Ortungssensors bestimmte Objekttiefe in zumindest einem Betriebszustand zu weniger als 20 %, vorteilhaft zu weniger als 10 %, besonders vorteilhaft zu weniger als 5 %, von der Ortungsmasse des Ortungsobjekts beeinflusst wird. In einer weiteren Ausgestaltung ist der zweite Ortungssensor dazu vorgesehen, weitere, dem Fachmann als sinnvoll erscheinende Informationen über das Ortungsobjekt zu erfassen, wie insbesondere Informationen über eine Art, eine Lage parallel zu einer Oberfläche des Messobjekts, eine Ausrichtung, einen Durchmesser, eine Größe, eine Form des Ortungsobjekts und/oder einen Abstand des Ortungsobjekts zu anderen Ortungsobjekten oder die Ortung beeinflussenden Elementen. Die Recheneinheit ist dazu vorgesehen, mittels des zweiten Ortungssensors einen insbesondere systematischen Fehler des ersten Ortungssensors zu erkennen und zu korrigieren, beispielsweise aufgrund eines zweiten metallischen und insbesondere ferromagnetischen Objekts hinter dem Messobjekt.

Ferner ist die Recheneinheit dazu vorgesehen, die Objekttiefe mittels zumindest einer Objektmasseninformation zu bestimmen, die eine Ortungsmasse des Ortungsobjekts beschreibt, wodurch eine besonders genaue Bestimmung der Objekttiefe mit einem induktiven Ortungssensor, erreicht werden kann. Insbesondere kann der erste Ortungssensor bei korrekter Objektmasseninformation eine Genauigkeit kleiner als ± 1 mm erreichen. Unter einer "Objektmasseninformation" soll insbesondere eine Information verstanden werden, die einen Wert einer Objektmasse eines erwarteten Messobjekts, insbesondere eines verbauten Armierungseisens, beschreibt. Vorzugsweise ist die Objektmasseninformation von einem Durchmesser eines Armierungseisens abhängig. Insbesondere soll unter "beschreiben" in diesem Zusammenhang verstanden werden, dass die Ortungsmasse insbesondere bei bekannter Form des Ortungsobjekts aus der Objektmasseninformation ableitbar ist.

Die Objektmasseninformation ist durch einen Bediener einstellbar, wodurch bei einem bekannten Ortungsobjekt eine sehr genaue Ortung möglich ist. Insbesondere soll unter der Wendung "durch einen Bediener einstellbar" verstanden werden, dass die Recheneinheit dazu vorgesehen ist, eine mittels eines Bedienelements der Ortungsvorrichtung eingestellte Objektmasseninformation zumindest zu speichern. Vorzugsweise sind mittels des Bedienelements eine Form und/oder zumindest ein Maß eines, dem Fachmann als sinnvoll erscheinenden Messobjekts einstellbar, besonders bevorzugt jedoch ein Durchmesser eines Armierungseisens. Vorzugsweise ist die Recheneinheit dazu vorgesehen, zumindest einen systematischen Messfehler des zweiten Ortungssensors durch eine mittels der Objektmasseninformation bestimmte Objekttiefe zu kompensieren. Beispielsweise kann so ein durch eine unbekannte Ausbreitungsgeschwindigkeit im Messobjekt entstandener Messfehler bestimmt werden.

Weiterhin wird vorgeschlagen, dass die Recheneinheit dazu vorgesehen ist, die Objektmasseninformation aus den Ortungskenngrößen zumindest des ersten Ortungs-sensors und des zweiten Ortungssensors zu bestimmen, wodurch diese Information besonders komfortabel ermittelt werden kann. Unter dem Begriff "bestimmen" soll in diesem Zusammenhang insbesondere verstanden werden, dass die Recheneinheit aus den Ortungskenngröße der Ortungssensoren die Objektmasseninformation berechnet.

In einer vorteilhaften Ausbildung der Erfindung wird vorgeschlagen, dass die Recheneinheit dazu vorgesehen ist, dem Bediener anzuzeigen, wenn die bestimmte Objektmasseninformation von der durch den Bediener eingestellten Objektmasseninformation abweicht, wodurch eine Ortung eines Messobjekts mit einer unvorhergesehenen Objektmasse von dem Bediener besonders einfach erkannt werden kann. Insbesondere soll unter "anzeigen" verstanden werden, dass die Recheneinheit dazu vorgesehen ist, über ein entsprechendes Mittel dem Bediener ein optisches, akustisches und/oder haptisches Signal auszugeben, dem die Information zugeordnet ist, dass die bestimmte Objektmasseninformation von der durch den Bediener eingestellten Objektmasseninformation abweicht. Besonders vorteilhaft ist die Recheneinheit dazu vorgesehen, eine Abweichung der bestimmten Objektmasseninformation von der eingestellten Objektmasseninformation anzuzeigen. Unter "abweichen" soll in diesem Zusammenhang insbesondere verstanden werden, dass die bestimmte Objektmasseninformation von der eingestellten Objektmasseninformation um mehr als 50 %, vorteilhaft um mehr als 25 %, besonders vorteilhaft um mehr als 10 %, verschieden ist.

Des Weiteren wird vorgeschlagen, dass die Recheneinheit dazu vorgesehen ist, die aus den bestimmten Objektmasseninformationen von mehreren Ortungsobjekten zumindest eine Objektsollmasseninformation zu bestimmen. Unter einer "Objektsollmasseninformation" soll insbesondere eine Information verstanden werden, die beschreibt, was für eine Objektmasse bei einem Messobjekt mit mehreren Ortungsobjekten erwartet wird. Insbesondere ist die Recheneinheit dazu vorgesehen, die Objektsollmasseninformation aus ermittelten Objektmasseninformationen von mehreren Ortungsobjekten insbesondere mit ähnlichen Objektmassen zu mitteln. Vorzugsweise ist die Recheneinheit dazu vorgesehen, die Objektsollmasseninformation von einer statistischen Verteilung mehrerer ermittelter Objektmasseninformationen mehrerer Ortungsobjekte abhängig zu mitteln. Beispielsweise könnte die Recheneinheit ermitteln, dass hauptsächlich Armierungseisen eines bestimmten Durchmessers geortet worden sind. Die Recheneinheit ist dazu vorgesehen, durch eine Mittelung der bestimmten Objektmassen der Ortungsobjekte eine besonders genaue Objektsollmasseninformation zu bestimmen.

Zudem wird vorgeschlagen, dass die Recheneinheit dazu vorgesehen ist, aus Objekttiefeninformationen von mehreren Ortungsobjekten zumindest eine Objektsolltiefeninformation zu bestimmen, wodurch eine besonders komfortable Überprüfung eines Messobjekts auf unterschiedlich tief angeordnete Messobjekte erreicht werden kann. Unter einer "Objektsolltiefeninformation" soll insbesondere eine Information verstanden werden, die beschreibt, was für eine Objekttiefe bei einem Ortungsobjekt mit mehreren Ortungsobjekten erwartet wird. Insbesondere ist die Recheneinheit dazu vorgesehen, zumindest jeweils eine Objekttiefeninformation von mehreren Ortungsobjekten zu speichern. Alternativ oder zusätzlich könnte eine Objektsolltiefeninformation durch einen Bediener einstellbar sein. Vorzugsweise ist die Recheneinheit dazu vorgesehen, eine wesentliche Abweichung einer bestimmten Objekttiefe eines Ortungsobjekts von der Objektsolltiefeninformation zu signalisieren, insbesondere wenn das Ortungsobjekt flacher angeordnet ist, als die Objektsolltiefeninformation vorgibt.

Des Weiteren wird vorgeschlagen, dass die Ortungsvorrichtung einen Bewegungssensor umfasst, der dazu vorgesehen ist, eine Bewegung zumindest der Ortungssensoren relativ zu einem Messobjekt zu erfassen, wodurch eine besonders genaue Ortung und eine vorteilhafte Darstellung der Ortungsergebnisse möglich sind. Alternativ oder zusätzlich könnte der zweite Ortungssensor dazu vorgesehen sein, zumindest eine Ortsinformation des Ortungsobjekts auf einer Ebene senkrecht zu einer Ortungsrichtung des ersten Ortungssensors zu erfassen, wodurch metallische und insbesondere ferromagnetische Objekte erkannt und insbesondere kompensiert werden können, die parallel zu einer vorgesehenen Bewegungsrichtung verlaufen und ein Ortungsergebnis beeinflussen. Unter einem "Bewegungssensor" soll ein, dem Fachmann als sinnvoll erscheinender Sensor verstanden werden, vorteilhaft jedoch ein optischer Sensor, ein Beschleunigungssensor und/oder besonders vorteilhaft ein Sensor, der eine Bewegung von Walzen aufnimmt, die dazu vorgesehen sind, bei einer Ortung auf dem Messobjekt abzurollen. Vorzugsweise ist die Recheneinheit dazu vorgesehen, einen Einfluss eines zu einem Ortungsobjekt benachbarten, insbesondere zuvor georteten, Objekts, das das Ortungsergebnis beeinflusst, zu kompensieren. Beispielsweise könnte eine Maschenweite einer Armierungsmatte von einem Bediener eingegeben werden und eine daraus resultierende Beeinflussung des Ortungsergebnisse insbesondere des ersten Ortungssensors könnte kompensiert werden. Vorzugsweise sind die Ortungssensoren in der vorgesehenen Bewegungsrichtung nebeneinander angeordnet. Die Ortungsergebnisse der Ortungssensoren werden über die Bewegung des Ortungssensors relativ zu einem Messobjekt korreliert. Alternativ könnten die Ortungsergebnisse der Ortungssensoren über eine ermittelte Zeit und/oder über ein ermitteltes und gespeichertes Maximum der Ortungskenngrößen korreliert werden. Alternativ oder zusätzlich könnte die Recheneinheit dazu vorgesehen sein, die berechneten Objekttiefen der Ortungssensoren miteinander zu korrelieren. Des Weiteren könnten die Ortungssensoren alternativ oder zusätzlich relativ zu der vorgesehenen Bewegungsrichtung senkrecht nebeneinander, schräg nebeneinander und/oder deckungsgleich angeordnet sein. Bevorzugt ist die Recheneinheit dazu vorgesehen, einen Verlauf der Ortungskenngröße und/oder der Objekttiefe insbesondere über eine Zeit und/oder vorteilhaft über eine Bewegung zu speichern. Vorzugsweise ist die Recheneinheit dazu vorgesehen, einen Verlauf der Ortungskenngröße und/oder der Objekttiefe an den Bediener auszugeben. Vorteilhaft ist die Recheneinheit dazu vorgesehen, einen Verlauf der Ortungskenngröße über die Zeit und/oder vorteilhaft über die Bewegung, insbesondere von einer Korrelation miteinander, im Voraus zu prognostizieren. Dadurch kann ein Einfluss eines Ortungsobjekts auf ein Ortungsergebnis eines nächsten Ortungsobjekts herausgerechnet werden.

Die erfindungsgemäße Ortungsvorrichtung soll hierbei nicht auf die oben beschriebene Anwendung und Ausführungsform beschränkt sein. Insbesondere kann die erfindungsgemäße Ortungsvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Handortungsgerät mit einer schematisch dargestellten Ortungsvorrichtung, die zwei Ortungssensoren aufweist,
- Fig. 2: das Handortungsgerät aus Figur 1, ein Messobjekt mit mehreren Ortungsobjekten sowie Verläufe von Ortungskenngrößen der Ortungssensoren und einen Teil einer Anzeige der Objekttiefe und
- Fig. 3: ein Verfahren zur Bestimmung einer Objekttiefe eines verdeckt angeordneten Ortungsobjekts mit der Ortungsvorrichtung aus Figur 1.

### Beschreibung des Ausführungsbeispiels

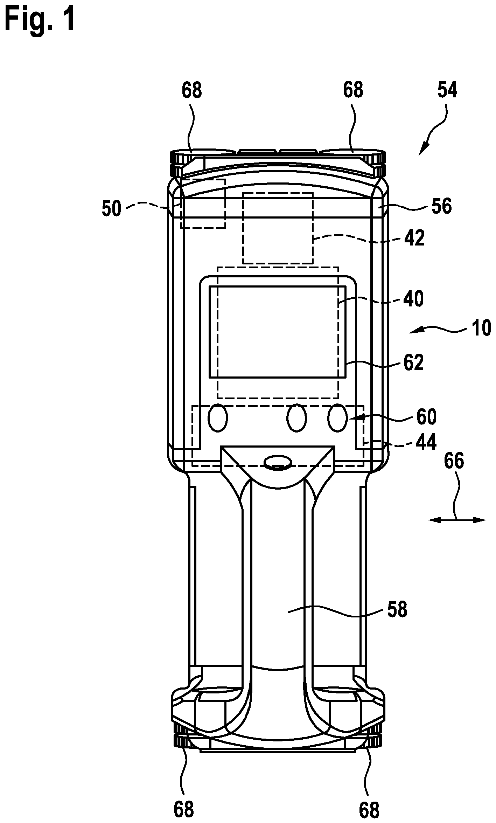

Figur 1 zeigt ein Handortungsgerät 54 mit einer erfindungsgemäßen Ortungsvorrichtung 10, einem Gerätegehäuse 56 mit einem Handgriff 58, Bedienelementen 60 und einem Ausgabemittel 62. Das Ausgabemittel 62 ist als ein Display ausgebildet. Die Ortungsvorrichtung 10 ist im Wesentlichen in einem Innenraum des Gerätegehäuses 56 angeordnet. Die Ortungsvorrichtung 10 ist dazu vorgesehen, in eine Ortungsrichtung 64 zu orten, die durch eine Rückseite des Gerätegehäuses 56 verläuft. Die Bedienelemente 60 und das Ausgabemittel 62 sind auf einer Vorderseite des Gerätegehäuses 56 angeordnet.

Die Ortungsvorrichtung 10 ist dazu vorgesehen, eine Objekttiefe 12, 14, 16 eines verdeckt angeordneten Ortungsobjekts 18-38, hier Armierungseisen, zu bestimmen. Dazu umfasst die Ortungsvorrichtung 10 einen ersten Ortungssensor 40, einen zweiten Ortungssensor 42 und eine Recheneinheit 44. Der erste Ortungssensor 40 und der zweite Ortungssensor 42 umfassen jeweils eine nicht näher dargestellte Elektronik, die dazu vorgesehen ist, ein Ortungssignal zu erzeugen und eine empfangene Reflexion des Ortungssignals an den Ortungsobjekten 18-38 zur Auswertung durch die Recheneinheit 44 aufzubereiten.

Der erste Ortungssensor 40 ist als ein induktiver Ortungssensor ausgebildet. Der erste Ortungssensor 40 umfasst eine nicht näher dargestellte Spule, die bei einer Ortung ein im Wesentlichen magnetisches Ortungssignal in ein Messobjekt 52 sendet. Die Spule empfängt einen von den Ortungsobjekten 18-38 reflektierten Anteil des Ortungssignals. Der reflektierte Anteil des Ortungssignals entsteht durch in ein Ortungsobjekt 18-38 induzierte Wirbelströme. Der erste Ortungssensor 40 gibt eine erste Ortungskenngröße 46 an die Recheneinheit 44 aus. Die Recheneinheit 44 wertet zumindest eine Amplitude des reflektierten Anteils des Ortungssignals aus.

Der zweite Ortungssensor 42 ist als ein Radarsensor ausgebildet. Der zweite Ortungssensor 42 umfasst eine nicht näher dargestellte Antenne, die bei einer Ortung ein im Wesentlichen hochfrequentes elektromagnetisches Ortungssignal in das Messobjekt 52 sendet. Die Antenne empfängt einen von den Ortungsobjekten 18-38 reflektierten Anteil des Ortungssignals. Der zweite Ortungssensor 42 gibt eine zweite Ortungskenngröße 48 an die Recheneinheit 44 aus. Somit ist der zweite Ortungssensor 42 dazu vorgesehen, Ortungsobjekte 18-38 zumindest im Wesentlichen von einer Ortungsmasse der Ortungsobjekte 18-38 unabhängig zu orten. Der zweite Ortungssensor 42 ist auf einer Ebene senkrecht zu einer vorgesehenen Bewegungsrichtung 66 neben dem ersten Ortungssensor 40 angeordnet.

Die Ortungsvorrichtung 10 umfasst einen Bewegungssensor 50, der dazu vorgesehen ist, eine Bewegung der Ortungssensoren 40, 42 relativ zu dem Messobjekt 52 zu erfassen. Der Bewegungssensor 50 erfasst die Bewegung von einem von vier Walzkörpern 68, die dazu vorgesehen sind, bei einer Bewegung des Handortungsgeräts 54 in der vorgesehenen Bewegungsrichtung 66 über das Messobjekt 52 auf dem Messobjekt 52 abzurollen. Zudem könnte der Bewegungssensor 50 die Bewegung von weiteren der Walzkörper 68 erfassen.

Die Recheneinheit 44 bestimmt der Reihe nach bei einer Ortung aus der Ortungskenngröße 46 des ersten Ortungssensors 40 Objekttiefen 12, 14, 16 der Ortungsobjekte 18-38. Dabei korrigiert die Recheneinheit 44 einen an den Bediener ausgegebene Betrag der Objekttiefen 12, 14, 16 und/oder eine an den Bediener ausgegebene Toleranz der Objekttiefen 12, 14, 16 mittels der Ortungskenngröße 48 des zweiten Ortungssensors 42. Die Recheneinheit 44 ist dazu vorgesehen, in verschiedenen Ortungsmodi Informationen der Ortungsobjekte 18-38 auf unterschiedliche, dem Fachmann als sinnvoll erscheinende Art und Weise zu berechnen und an den Bediener auszugeben. Die Ortungsmodi können von einem Bediener mittels der Bedienelemente 60 umgeschaltet und/oder konfiguriert werden.

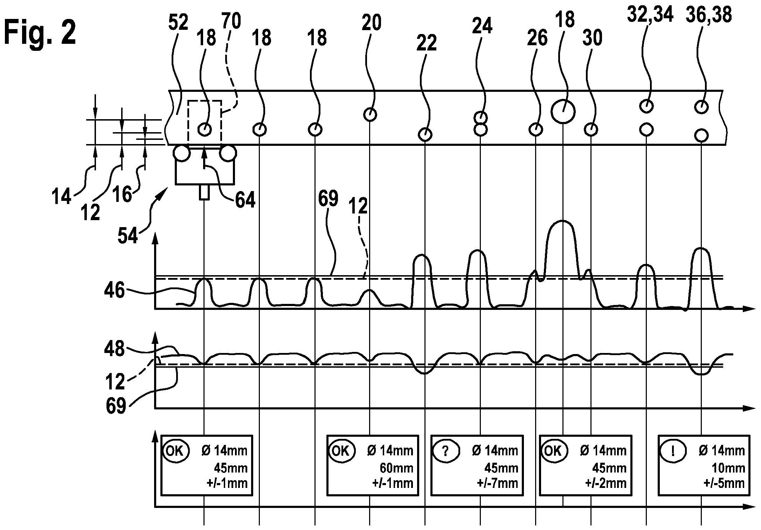

Figur 2 zeigt das Messobjekt 52 mit mehreren Ortungsobjekten 18-38, das Handortungsgerät 54, einen Betrag der ersten Ortungskenngröße 46, einen Betrag der zweiten Ortungskenngröße 48, beispielhafte Anzeigen des Ausgabemittels 62 für vier Ortungen, mit einem Wert der vorgesehenen Objekttiefe 12, und einen Schwellwert 69 in Bezug auf die Wert der Ortungskenngrößen 46, 48. Unterschreitet eine Objekttiefe 16 den Schwellwert 69, liegt eine Unterdeckung der Ortungsobjekte 22, 36 vor. Hier beträgt der Schwellwert 40 mm. Die Ortungsobjekte 18 sind teilweise in einer vorgesehenen Objekttiefe 12 angeordnet und weisen eine erwartete Objektmasse auf. Die vorgesehene Objekttiefe 12 ist ein Wert, in dem die Ortungsobjekte 18 verbaut sein sollen. Die vorgesehene Objekttiefe 12 tritt bei einer statistischen Auswertung der erfassten Objekttiefe 12 in der Regel am häufigsten auf. Der Schwellwert 69 ist in diesem Ausführungsbeispiel geringfügig kleiner als die vorgesehene Objekttiefe 12. Hier beträgt die vorgesehene Objekttiefe 45 mm. Das Messobjekt 52 ist als eine aus Stahlbeton gebildete Wand ausgebildet. Die Ortungsobjekte 18-38 sind als verschiedene innerhalb der Wand angeordnete Armierungseisen ausgebildet.

Die drei ersten Ortungsobjekte 18 sind in einer vorgesehenen Objekttiefe 12 angeordnet. Das zweite Ortungsobjekt 20 ist in der zweiten Objekttiefe 14 angeordnet, die tiefer als eine vorgesehene Objekttiefe 12 und der Schwellwert 69 ist. Das dritte Ortungsobjekt 22 ist in einer dritten Objekttiefe 16 angeordnet, die flacher als eine vorgesehene Objekttiefe 12 ist. Somit ist das dritte Ortungsobjekt 22 nicht ausreichend von Beton überdeckt, wodurch das Armierungseisen oxidieren kann. Das vierte Ortungsobjekt 24 weist eine größere Objektmasse als eine erwartete Objektmasse auf. Das fünfte Ortungsobjekt 26, das sechste Ortungsobjekt 28 und das siebte Ortungsobjekt 30 sind so nahe beieinander angeordnet, dass die Ortungsergebnisse einander beeinflussen. Zudem weist das sechste Ortungsobjekt 28 eine größere Objektmasse als eine erwartete Objektmasse auf. Das achte Ortungsobjekt 32 und das neunte Ortungsobjekt 34 sind hintereinander angeordnet, wobei das achte Ortungsobjekt 32 in der ersten Objekttiefe 12 angeordnet ist. Das zehnte Ortungsobjekt 36 und das elfte Ortungsobjekt 38 sind ebenfalls hintereinander angeordnet, wobei das neunte Ortungsobjekt 36 in der dritten Objekttiefe 14 angeordnet ist, die flacher als eine vorgesehene Objekttiefe 12 ist. Die Ortungsobjekte 18-38 weisen bis auf das sechste Ortungsobjekt 28 einen Durchmesser von 14 mm auf, wobei das vierte Ortungsobjekt 24 als ein Doppelstab ausgebildet ist.

Der Bediener stellt eine von ihm erwartete Objektmasseninformation, hier einen Durchmesser der Armierungseisen von 14 mm, mittels der Bedienelemente 60 an dem Handortungsgerät 54 ein. In diesem Ausführungsbeispiel stellt der Bediener einen Durchmesser der Armierungseisen ein. Die Recheneinheit 44 speichert die erwartete Objektmasseninformation. Der Bediener bewegt das Handortungsgerät 54 in Bewegungsrichtung 66 über das Messobjekt 52. Der erste Ortungssensor 40 und der zweite Ortungssensor 42 erfassen jeweils das erste Ortungsobjekt 18, sobald eines der ersten Ortungsobjekte 18 in einem Ortungsbereich 70 der Ortungssensoren 40, 42 angeordnet ist. Die Recheneinheit 44 bestimmt eine erste Betragsinformation der Objekttiefe 12 mittels der Objektmasseninformation und der ersten Ortungskenngröße 46. Zudem erkennt die Recheneinheit 44 bei einer Ortung zwischen den Ortungsobjekten 18-38 aus der zweiten Ortungskenngröße 48, wenn kein Ortungsobjekt in dem Ortungsbereich 70 angeordnet ist, und bestimmt dann einen Leerabzug der ersten Ortungskenngröße 46, den sie bei weiteren Ortungen von der ersten Ortungskenngröße 46 abzieht.

Zudem bestimmt die Recheneinheit 44 aus der zweiten Ortungskenngröße 48 eine zweite Betragsinformation der Objekttiefe 12. Die Recheneinheit 44 korreliert die erste Betragsinformation und die zweite Betragsinformation miteinander, so dass eine Ortung des ersten Ortungssensors 40 einer Ortung des zweiten Ortungssensors 42 zugeordnet werden kann. Wenn die erste Betragsinformation und die zweite Betragsinformation konsistent sind, gibt die Recheneinheit 44 einen Betrag der Objekttiefe 12 an den Bediener aus (vgl. Figur 2). Zudem zeigt die Recheneinheit 44 dem Bediener an, dass der ermittelte Betrag eine geringe Toleranz aufweist, beispielsweise ± 1 mm. Zudem kalibriert die Recheneinheit 44 eine Bestimmung der zweiten Betragsinformation aus der zweiten Ortungskenngröße 48 mittels der mit der ersten Ortungskenngröße 46 ermittelten Objekttiefe 12. Dazu bestimmt die Recheneinheit 44 eine Dielektrizitätskonstante des Messobjekts 52.

Die Recheneinheit 44 ist dazu vorgesehen, dass der Bediener mittels der Bedienelemente 60 den Schwellwert 69 eingibt, unterhalb dessen eine Unterdeckung der Armierungseisen vorliegt. Wenn eine bestimmte Betragsinformation der Objekttiefe 12 flacher ist als der Schwellwert 69, gibt die Recheneinheit 44 an den Bediener einen insbesondere optischen und/oder akustischen Alarm aus. Wenn eine Toleranz der Objekttiefe 12 zum Teil flacher ist als der Schwellwert 69, gibt die Recheneinheit 44 einen Warnhinweis an den Bediener aus. In Figur 2 ist dieser Schwellwert 69 in einem Verhältnis zu den Ortungskenngrößen 46, 48 dargestellt. Wie zu sehen ist, kann mittels der Ortungskenngröße 46 des ersten Ortungssensors 40 nicht zuverlässig erkannt werden, ob ein Ortungsobjekt 36 eine Unterdeckung aufweist oder ob ein Ortungsobjekt 24, 28, 32, 34 eine größere Ortungsmasse als erwartet aufweist.

Im Laufe der Verortung des Messobjekts 52 fährt der Bediener an dem Messobjekt 52 entlang. Die Recheneinheit 44 speichert dabei einen Verlauf der ersten Betragsinformation und der zweiten Betragsinformation. Bei jeder konsistenten Bestimmung eines Betrags der Objekttiefe 12, 14, 16 eines der Ortungsobjekte 18-22 kalibriert die Recheneinheit 44 eine Bestimmung der zweiten Betragsinformation aus der zweiten Ortungskenngröße 48.

Bei der Verortung des vierten bis zehnten Ortungsobjekts 24-38 sind eine erste Betragsinformation und eine zweite Betragsinformation inkonsistent, weil von dem Bediener erwartete und eingestellte Objektmasseninformationen von einer tatsächlichen Ortungsmasse abweichen. Die Recheneinheit 44 zeigt dem Bediener einen aus der zweiten Ortungskenngröße 48 ermittelten Betrag der Objekttiefe 12, 14, 16 an. Zudem zeigt die Recheneinheit 44 dem Bediener an, dass ein aus der zweiten Ortungskenngröße 48 ermittelter Betrag eine größere Toleranz aufweist, beispielsweise ± 1 mm. Ein Wert der Toleranz ist dabei von einer Genauigkeit der Kalibrierung bei der Bestimmung der zweiten Betragsinformation abhängig. Beispielsweise beträgt die Toleranz, wenn bei einem Messobjekt 52 keine konsistente Bestimmung eines Betrags möglich war, bis zu ± 10 mm. Zudem zeigt die Recheneinheit 44 dem Bediener an, wenn ein bestimmter Wert der Ortungsmasse von der eingestellten Ortungsmasse abweicht.

Die Recheneinheit 44 ist dazu vorgesehen, eine Objektmasseninformation aus den Ortungskenngrößen 46, 48 zumindest des ersten Ortungssensors 40 und des zweiten Ortungssensors 42 zu bestimmen. Zudem bestimmt die Recheneinheit 44 eine Toleranz der bestimmten Objektmasseninformation. Die Recheneinheit 44 zeigt dem Bediener an, wenn die bestimmte Objektmasseninformation von der durch den Bediener eingestellten Objektmasseninformation abweicht, hier mir einem ≠-Zeichen. Zudem könnte die Recheneinheit 44 die bestimmte Objektmassen und insbesondere eine Toleranz der bestimmten Objektmasseninformation anzeigen.

Des Weiteren ist eine Objektsolltiefeninformation mittels der Bedienelemente 60 einstellbar. Die Recheneinheit 44 ist dazu vorgesehen, die eingestellte Objektsolltiefeninformation zu speichern. Die Recheneinheit 44 ist dazu vorgesehen, die eingestellte Objektsolltiefeninformation mit einem ermittelten Betrag einer Objekttiefe 12, 14, 16 zu vergleichen. Wenn die eingestellte Objektsolltiefeninformation von einem ermittelten Betrag einer Objekttiefe 12, 14, 16 abweicht, beispielsweise um mehr als einen einstellbaren insbesondere richtungsabhängigen Wert, zeigt die Recheneinheit 44 dem Bediener eine Warnung an. Alternativ oder zusätzlich könnte die Recheneinheit 44 eine akustische und/oder taktile Warnung ausgeben. Die Recheneinheit 44 signalisiert dem Bediener, wenn eine Unterdeckung vorliegt, hier mit einem dargestellten Ausrufezeichen. Ferner signalisiert die Recheneinheit 44 dem Bediener, wenn eine Unterdeckung aufgrund der bestimmten Toleranzen vorliegen könnte, hier mit einem dargestellten Fragezeichen.

Die Recheneinheit 44 ist dazu vorgesehen, durch eine statistische Auswertung der Ergebnisse der Bestimmung der Objekttiefen 12, 14, 16 aus den bestimmten Objektmasseninformationen bzw. aus bestimmten Objekttiefeninformationen von mehreren Ortungsobjekten 18 eine Objektsolltiefeninformation bzw. eine Objektsollmasseninformation zu bestimmen. Dazu wertet die Recheneinheit 44 eine statistische Verteilung der bestimmten Objektmasseninformationen bzw. Objekttiefeninformationen aus.

Die verschiedenen oben beschriebenen Funktionen sind jeweils auf eine, dem Fachmann als sinnvoll erscheinende Art mittels der Recheneinheit 44 konfigurierbar und desaktivierbar.

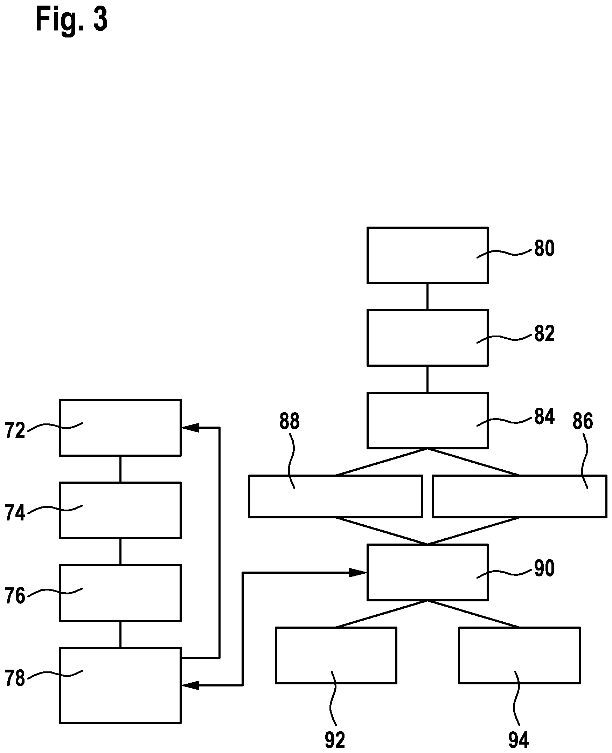

Figur 3 zeigt einen Ablauf eines Teils eines erfindungsgemäßen Verfahrens zur Bestimmung der Objekttiefe 12, 14, 16 des verdeckt angeordneten Ortungsobjekts 18-38. In einem Verfahrensschritt 72 erfasst der erste Ortungssensor 40 das Ortungsobjekt 18. In einem nächsten Verfahrensschritt 74 erfasst der zweite Ortungssensor 42 das Ortungsobjekt 18. In einem folgenden Verfahrensschritt 76 bestimmt die Recheneinheit 44 aus der Ortungskenngröße 48 des zweiten Ortungssensors 42 eine Betragsinformation der Objekttiefe 16 des Ortungsobjekts 18. Diese Betragsinformation weist eine relativ große Toleranz auf, die dem Bediener angezeigt werden kann.

In einem weiteren Verfahrensschritt 78 bestimmt die Recheneinheit 44 aus der mittels des zweiten Ortungssensors 42 bestimmten Betragsinformation der Objekttiefe 16 und der erfassten Ortungskenngröße 46 des ersten Ortungssensors 40 die für ein nächstes Ortungsobjekt 18-38 erwartete Objektmasseninformation. Diese Information gibt die Recheneinheit 44 mittels des Ausgabemittels 62 an den Bediener zur Kontrolle auf Plausibilität aus. Dieser Vorgang wird wiederholt, wenn der Bediener das Handortungsgerät 54 über weitere Ortungsobjekte 18-38 verfährt, dabei wird die erwartete Objektmasseninformation durch Mittelung genauer bestimmt, wobei nur bestimmte Objektmasseninformationen gemittelt werden, die um einen bestimmten Wert von einem Median der Objektmasseninformationen abweichen, oder aber nach einer anderen, dem Fachmann als sinnvoll erscheinenden Methode. Die Toleranz der Betragsinformation wird durch die Mittelung geringer, was dem Bediener angezeigt wird. Alternativ oder zusätzlich könnte der Bediener die Objektmasseninformation mittels der Bedienelemente 60 einstellen, wenn sie ihm bekannt ist. Insbesondere wenn die erwartete Objektmasseninformation nur bestimmte Werte einnehmen kann, beispielsweise Armierungseisen bestimmte Durchmesser aufweisen, kann der Bediener und/oder die Recheneinheit 44 die Objektmasseninformation auf einen solchen Wert korrigieren.

Bei einem Bewegen des Handortungsgeräts 54 erfasst der erste Ortungssensor 40 in einem weiteren Verfahrensschritt 80 ein weiteres Ortungsobjekt 18-38. Die Recheneinheit 44 bestimmt in einem nächsten Verfahrensschritt 82 mittels der bestimmten und/oder eingegebenen Objektmasseninformation und der Ortungskenngröße 46 des ersten Ortungssensors 40 eine Objekttiefe 12, 14, 16. In einem weiteren Verfahrensschritt 84 erfasst der zweite Ortungssensor 42 das Ortungsobjekt 18-38. Die Recheneinheit 44 bestimmt in einem nächsten Verfahrensschritt 86 aus der Ortungskenngröße 46 des zweiten Ortungssensors 42 eine weitere Objekttiefe 12, 14, 16.

Wenn die Ortungssensoren 40, 42 in Bewegungsrichtung 66 voneinander beabstandet angeordnet sind, bestimmt die Recheneinheit 44 in einem Verfahrensschritt 88 durch eine Korrelation, welche erfassten und gespeicherten Objekttiefen 12, 14, 16 und/oder Ortungskenngrößen 46, 48 zueinander gehören.

Die Recheneinheit 44 überprüft in einem Verfahrensschritt 90 insbesondere unter Berücksichtigung der für die zwei Objekttiefen 12, 14, 16 ermittelten Toleranzen, ob die mittels des ersten Ortungssensors 40 bestimmten Objekttiefen 12, 14, 16 und damit die ermittelten und/oder eingegebenen Objektmasseninformationen korrekt sind. Dazu bestimmt die Recheneinheit 44 einen Quotienten der Betragsinformationen der mittels des ersten Ortungssensors 40 und des zweiten Ortungssensors 42 bestimmten Objekttiefen 12, 14, 16. Wenn die mittels des ersten Ortungssensors 40 bestimmten Objekttiefen 12, 14, 16 jeweils innerhalb der Toleranz der mittels des zweiten Ortungssensors 42 bestimmten Objekttiefen 12, 14, 16 liegen, gibt die Recheneinheit 44 in einem Verfahrensschritt 92 eine Betragsinformation der mittels des ersten Ortungssensors 40 bestimmten Objekttiefe 12, 14, 16 und die zuvor ermittelte Toleranz der mittels des ersten Ortungssensors 40 bestimmte Objekttiefen 12, 14, 16 aus. Wenn die mittels des ersten Ortungssensors 40 bestimmte Objekttiefe 12, 14, 16 außerhalb der Toleranz der mittels des zweiten Ortungssensors 42 bestimmten Objekttiefe 12, 14, 16 liegt, gibt die Recheneinheit 44 in einem Verfahrensschritt 94 eine Betragsinformation der mittels des zweiten Ortungssensors 42 bestimmten Objekttiefe 12, 14, 16 und die zuvor ermittelte Toleranz der mittels des zweiten Ortungssensors 42 bestimmten Objekttiefe 12, 14, 16 aus.

Alternativ oder zusätzlich könnte der Bediener bei der Ausgabe eines Betrags einer Objekttiefe 12, 14, 16 dem Bediener anzeigen, dass der Betrag der Objekttiefe 12, 14, 16 mittels des zweiten Ortungssensors 42 bestimmt wurde, wie beispielsweise durch eine andere Farbe, ein Symbol, insbesondere ein Ausrufezeichen, einen Ton, ein Lichtsignal, eine andere Testdarstellung und/oder eine andere Anordnung der Anzeige. Des Weiteren könnte die Recheneinheit 44 einen Betrag der Objekttiefe 12, 14, 16, der mittels des ersten Ortungssensors 40 bestimmt wurde, und einen Betrag der Objekttiefe 12, 14, 16, der mittels des zweiten Ortungssensors 42 bestimmt wurde, gleichzeitig ausgeben.

## Patentansprüche

1. Ortungsvorrichtung zur Bestimmung einer Objekttiefe (12, 14, 16) eines verdeckt angeordneten Ortungsobjekts (18-38), insbesondere eines Armierungseisens, mit einem ersten Ortungssensor (40), zumindest einem zweiten Ortungssensor (42) und mit einer Recheneinheit (44), die dazu vorgesehen ist, zumindest aus einer Ortungskenngröße (46) des ersten Ortungssensors (40) eine Objekttiefe (12, 14, 16) zu bestimmen, wobei der erste Ortungssensor (40) als ein induktiver Ortungssensor ausgebildet ist, der zweite Ortungssensor (42) als ein Radarsensor ausgebildet ist, und dass die Recheneinheit (44) dazu vorgesehen ist, die bestimmte Objekttiefe (12, 14, 16) in zumindest einem Betriebszustand mittels einer Ortungskenngröße (48) des zweiten Ortungssensors (42) zu korrigieren, wobei der zweite Ortungssensor (42) dazu vorgesehen ist, das Ortungsobjekt (18-38) zumindest im Wesentlichen von einer Ortungsmasse des Ortungsobjekts (18-38) unabhängig zu orten, **dadurch gekennzeichnet, dass** die Recheneinheit (44) dazu vorgesehen ist, die Objekttiefe (12, 14, 16) mittels zumindest einer Objektmasseninformation zu bestimmen, die eine Ortungsmasse des Ortungsobjekts (18-38) beschreibt, wobei die Objektmasseninformation durch einen Bediener einstellbar ist.

2. Ortungsvorrichtung nach Anspruch 1, **dadurch gekennzeichnet, dass** die Recheneinheit (44) dazu vorgesehen ist, die Objektmasseninformation aus den Ortungskenngrößen (46, 48) zumindest des ersten Ortungssensors (40) und des zweiten Ortungssensors (42) zu bestimmen.

3. Ortungsvorrichtung nach den Ansprüchen 1 und 2, **dadurch gekennzeichnet, dass** die Recheneinheit (44) dazu vorgesehen ist, dem Bediener anzuzeigen, wenn die bestimmte Objektmasseninformation von der durch den Bediener eingestellten Objektmasseninformation abweicht.

4. Ortungsvorrichtung zumindest nach Anspruch 2, **dadurch gekennzeichnet, dass** die Recheneinheit (44) dazu vorgesehen ist, aus den bestimmten Objektmasseninformationen von mehreren Ortungsobjekten (18-22) zumindest eine Objektsollmasseninformation zu bestimmen.

5. Ortungsvorrichtung nach einem der vorhergehenden Ansprüche, **dadurch gekennzeichnet, dass** die Recheneinheit (44) dazu vorgesehen ist, aus Objekttiefeninformationen von mehreren Ortungsobjekten (18) zumindest eine Objektsolltiefeninformation zu bestimmen.

6. Ortungsvorrichtung nach einem der vorhergehenden Ansprüche, **gekennzeichnet durch** einen Bewegungssensor (50), der dazu vorgesehen ist, eine Bewegung zumindest der Ortungssensoren (40, 42) relativ zu einem Messobjekt (52) zu erfassen.

7. Handortungsgerät mit einer Ortungsvorrichtung (10) nach einem der vorhergehenden Ansprüche.

8. Verfahren zur Bestimmung einer Objekttiefe (12, 14, 16) eines verdeckt angeordneten Ortungsobjekts (18-38), insbesondere eines Armierungseisens, mittels einer Ortungsvorrichtung nach einem der Ansprüche 1 bis 6.

## Claims

1. Positioning device for determining an object depth (12, 14, 16) of a concealed positioning object (18-38), in particular of a reinforcing bar, comprising a first positioning sensor (40), at least one second positioning sensor (42), and comprising a computation unit (44), which is provided for determining an object depth (12, 14, 16) at least from a positioning characteristic variable (46) of the first positioning sensor (40), wherein the first positioning sensor (40) is embodied as an inductive positioning sensor, the second positioning sensor (42) is embodied as a radar sensor, and wherein the computation unit (44) is provided for correcting the determined object depth (12, 14, 16) in at least one operating state by means of a positioning characteristic variable (48) of the second positioning sensor (42), wherein the second positioning sensor (42) is provided for positioning the positioning object (18-38) at least substantially independently of a positioning mass of the positioning object (18-38), **characterized in that** the computation unit (44) is provided for determining the object depth (12, 14, 16) by means of at least one object mass information item which describes a positioning mass of the positioning object (18-38), wherein the object mass information item is settable by an operator.

2. Positioning device according to Claim 1, **characterized in that** the computation unit (44) is provided for determining the object mass information item from the positioning characteristic variables (46, 48) at least of the first positioning sensor (40) and of the second positioning sensor (42).

3. Positioning device according to Claims 1 and 2, **characterized in that** the computation unit (44) is provided for indicating to the operator if the determined object mass information item deviates from the object mass information item set by the operator.

4. Positioning device at least according to Claim 2, **characterized in that** the computation unit (44) is provided for determining at least one desired object mass information item from the determined object mass information items of a plurality of positioning objects (18-22).

5. Positioning device according to any of the preceding claims, **characterized in that** the computation unit (44) is provided for determining at least one desired object depth information item from object depth information items of a plurality of positioning objects (18).

6. Positioning device according to any of the preceding claims, **characterized by** a motion sensor (50) provided for detecting a motion at least of the positioning sensors (40, 42) relative to a measurement object (52).

7. Handheld positioning apparatus comprising a positioning device (10) according to any of the preceding claims.

8. Method for determining an object depth (12, 14, 16) of a concealed positioning object (18-38), in particular of a reinforcing bar, by means of a positioning device according to any of Claims 1 to 6.

## Revendications

1. Dispositif de localisation permettant de déterminer la profondeur d'objet (12, 14, 16) d'un objet à localiser (18-38) disposé de manière encastrée, en particulier d'un fer d'armature, comprenant un premier capteur de localisation (40), au moins un deuxième capteur de localisation (42) et comprenant une unité de calcul (44) qui est conçue pour déterminer la profondeur d'objet (12, 14, 16) au moins à partir d'une grandeur caractéristique de localisation (46) du premier capteur de localisation (40), le premier capteur de localisation (40) étant réalisé sous la forme d'un capteur de localisation inductif, le deuxième capteur de localisation (42) étant réalisé sous la forme d'un capteur radar, et l'unité de calcul (44) étant conçue pour corriger la profondeur d'objet (12, 14, 16) déterminée dans au moins un état de fonctionnement à l'aide d'une grandeur caractéristique de localisation (48) du deuxième capteur de localisation (42), le deuxième capteur de localisation (42) étant conçu pour localiser l'objet à localiser (18-38) au moins sensiblement indépendamment d'une masse de localisation de l'objet à localiser (18-38), **caractérisé en ce que** l'unité de calcul (44) est conçue pour déterminer la profondeur d'objet (12, 14, 16) à l'aide d'au moins une information de masse d'objet qui décrit une masse de localisation de l'objet à localiser (18-38), l'information de masse d'objet étant réglable par un opérateur.

2. Dispositif de localisation selon la revendication 1, **caractérisé en ce que** l'unité de calcul (44) est conçue pour déterminer l'information de masse d'objet à partir des caractéristiques de localisation (46, 48) au moins du premier capteur de localisation (40) et du deuxième capteur de localisation (42).

3. Dispositif de localisation selon les revendications 1 et 2, **caractérisé en ce que** l'unité de calcul (44) est conçue pour indiquer à l'opérateur si l'information de masse d'objet déterminée diffère de l'information de masse d'objet réglée par l'opérateur.

4. Dispositif de localisation au moins selon la revendication 2, **caractérisé en ce que** l'unité de calcul (44) est conçue pour déterminer au moins une information de masse nominale d'objet à partir des informations de masse d'objet déterminées de plusieurs objets de localisation (18-22).

5. Dispositif de localisation selon l'une des revendications précédentes, **caractérisé en ce que** l'unité de calcul (44) est conçue pour déterminer au moins une information de profondeur nominale d'objet à partir d'informations de profondeur d'objet de plusieurs objets de localisation (18).

6. Dispositif de localisation selon l'une des revendications précédentes, **caractérisé par** un capteur de mouvement (50) qui est conçu pour détecter un mouvement d'au moins les capteurs de localisation (40, 42) par rapport à un objet de mesure (52).

7. Appareil de localisation portatif comprenant un dispositif de localisation (10) selon l'une des revendications précédentes.

8. Procédé de détermination d'une profondeur d'objet (12, 14, 16) d'un objet à localiser (18-38) disposé de manière encastrée, en particulier d'un fer d'armature, à l'aide d'un dispositif de localisation selon l'une des revendications 1 à 6.
